# EUROPÄISCHE PATENTSCHRIFT

(11) **EP 2 181 080 B1**
(45) Veröffentlichungstag und Bekanntmachung des Hinweises auf die Patenterteilung: **08.06.2011**
(21) Anmeldenummer: 08775378.6
(22) Anmeldetag: 30.07.2008
(51) Int. Cl.: C04B 41/91

(54) **VERFAHREN ZUR HERSTELLUNG EINER HEIZEINRICHTUNG UND ENTSPRECHEND HERGESTELLTE HEIZEINRICHTUNG**
METHOD FOR THE PRODUCTION OF A HEATING DEVICE AND HEATING DEVICE PRODUCED ACCORDINGLY
PROCÉDÉ DE PRODUCTION D'UN DISPOSITIF DE CHAUFFAGE ET DISPOSITIF DE CHAUFFAGE AINSI OBTENUE

(30) Priorität: 24.08.2007 DE 102007040283
(43) Veröffentlichungstag der Anmeldung: 05.05.2010
(73) Patentinhaber: KraussMaffei Technologies GmbH, 80997 München (DE)
(72) Erfinder: BÜRKLE, Erwin, 83671 Benediktbeuern (DE); BURR, Steffen, 74626 Bretzfeld (DE)
(74) Vertreter: Zollner, Richard
(86) Internationale Anmeldenummer: PCT/EP2008/060026
(87) Internationale Veröffentlichungsnummer: WO 2009/027169

(56) Entgegenhaltungen:
- DE-U1-202004 009 742
- MEDRI V ET AL: "Degradation of mechanical and electrical properties after long-term oxidation and corrosion of non-oxide structural ceramic composites" JOURNAL OF THE EUROPEAN CERAMIC SOCIETY, ELSEVIER SCIENCE PUBLISHERS, BARKING, ESSEX, GB, Bd. 25, Nr. 10, 2005, Seiten 1723-1731, XP004905739 ISSN: 0955-2219

## Beschreibung

Die vorliegende Erfindung betrifft ein Verfahren zur Herstellung einer Heizeinrichtung gemäß dem Oberbegriff des Anspruchs 1 und eine entsprechend hergestellte Heizeinrichtung gemäß dem Oberbegriff des Anspruchs 13.

Der Einsatz von elektrisch leitfähigen Keramiken beispielsweise zu Heizzwecken ist hinlänglich bekannt. Auch im Maschinenbau werden die günstigen physikalischen und mechanischen Eigenschaften solcher Materialien, die beispielsweise in Siliciumnitrid eingebettetes Titannitrid umfassen, verwendet. So ist es aus dem Stand der Technik bekannt, Heizeinsätze oder sogar Formwerkzeuge selbst, wie sie beispielsweise bei Spritzgießmaschinen eingesetzt werden können, oder aber auch andere, eine Kunststoffschmelze führende oder berührende Elemente mittels einer elektrisch leitfähigen Keramik zu heizen. Hier kommen beispielsweise auch Düsenheizungen bei Einspritzeinheiten von Spritzgießmaschinen in Betracht. Dazu wird an die elektrisch leitfähige Keramik eine Spannung angelegt. Durch den Stromfluss entsteht eine Wärmeentwicklung nach Art einer Widerstandsheizung, die den gewünschten Heizzweck erfüllt. In diesem Zusammenhang wird beispielsweise auf die DE 20 2004 009 742 U1 hingewiesen.

Durch entsprechende Ausgestaltung der elektrisch leitfähigen Keramik, beispielsweise durch Ausgestaltung deren Dicke oder deren Form, kann der Heizeintrag an verschiedenen Punkten unterschiedlich gestaltet werden. So ist es beispielsweise bei Verwendung einer elektrisch leitfähigen Keramik als Heizeinsatz bei einem Formwerkzeug möglich, an einer Postition, an der stärker geheizt werden muss, eine stärkere Heizleistung durch entsprechend Ausbildung der elektrisch leitfähigen Keramik vorzusehen, an anderen Stellen die Heizleistung dafür geringer auszuwählen. Problematisch bei der Verwendung von elektrisch leitfähigen Keramiken ist jedoch, dass diese möglichst gegenüber anderen elektrisch leitfähigen Materialien, insbesondere Maschinenteilen, und auch eventuell gegenüber einer Kunststoffschmelze sicher elektrisch isoliert werden müssen. Ist die Isolationswirkung nicht ausreichend, kann es zu einem unerwünschten elektrischen Stromfluss an der Kontaktstelle zwischen elektrisch leitfähigen Materialien rund der elektrisch leitfähigen Keramik kommen. Für den Fall, dass die Isolation beispielsweise einer in einem Werkzeugstahl eingebetteten elektrisch leitfähigen Keramik mangelhaft oder defekt ist, fließt der Strom möglicherweise über den Werkzeugstahl des Werkzeugs ab, so dass die elektrisch leitfähige Keramik nicht mehr entsprechend beheizt wird, es kann zu einem Kurzschluss kommen. Übersteigt das elektrische Potential in der Keramik die Durchschlagsfestigkeit der Isolation kann ebenfalls ein Kurzschluss entstehen.

Bislang sind Verfahren bekannt, bei denen man die elektrisch leitfähigen Keramik mit elektrisch isolierenden Materialien beschichtet bzw. umwickelt oder beklebt. Solche lsolationsverfahren haben sich jedoch häufig als teuer und auch hinsichtlich der Haltbarkeit und Funktionsfähigkeit als problematisch erwiesen.

Überdies war es bekannt, bei einer elektrisch leitfähigen Keramik eine Isolationsschicht durch thermische Oxidation zu erzeugen.

Verwendet man beispielsweise als leitfähiges Element Titannitrid (TiN), welches in Siliciumnitrid (Si₃N₄) eingebettet ist, so laufen an den Grenzflächen, die der thermischen Oxidation ausgesetzt sind, folgende Prozesse ab:

Si₃N₄ + O₂ → SiO₂ + NOₓ

TiN + O₂ → TiO₂ + NOₓ

Problematisch ist jedoch die hohe Temperatur, der man die elektrisch leitfähige Keramik und gegebenenfalls die elektrischen Anschlüsse aussetzen muss. Darüber hinaus liegt eine degenerative Schicht vor, die sich bei nachfolgenden Prozessen abbauen bzw. abplatzen kann.

Aus der Veröffentlichung von Medri V et al "Degradation of Mechanical and Electrical Properties after long-term Oxidation and Corrosion of non-oxide Structural Ceramic Composites" (Journal of the European Ceramic Society, Elsevier Science Publishers, Barking; Essex, GB, Bd. 25, Nr. 10, 2005, Seiten 1723 - 1732) wird eine durch ein ätzendes Medium verursachte Korrosion untersucht. Dabei wird eine elektrisch leitfähige Keramik über 400 h einem ätzendem Medium ausgesetzt, wobei das TiN angegriffen, das Si₃N₄ aber nur wenig betroffen ist. Dadurch wird eine isolierende Schicht gebildet. Der Einsatz einer solchen Keramik als isolierte Heizeinrichtung wird in diesem Dokument jedoch nicht angesprochen.

Aufgabe der vorliegenden Erfindung ist es, ein einfaches und kostengünstiges Verfahren anzugeben, mit welchem bei einer Heizeinrichtung eine elektrisch leitfähige Keramik in gewünschter Weise isoliert werden kann. Überdies ist eine entsprechende Heizeinrichtung mit einer isolierten elektrisch leitfähigen Keramik gewünscht.

Diese Aufgabe wird durch ein Verfahren mit den Merkmalen des Anspruchs 1 bzw. eine Heizeinrichtung mit den Merkmalen des Anspruchs 13 gelöst.

Die Erfinder haben herausgefunden, dass sich bei der Einwirkung einer Lauge, einer Säure oder von Wasser (H₂O), jeweils in flüssigem oder gasförmigem Zustand, auf eine elektrisch leitfähige Keramik eine Isolationsschicht ausbildet. Dies erklärt man sich mit dem Effekt, dass die zwischen den elektrisch leitfähigen Körnern aufgrund der Sinterung ausgebildeten elektrisch leitfähigen Vernetzungsstrukturen aufgelöst werden, so dass nach dem Ätzvorgang - wobei als Ätzvorgang sowohl die Anwendung einer Lauge, einer Säure oder Wasser bezeichnet wird - ohne diese Vernetzungsstrukturen keine elektrische Leitfähigkeit in dem Bereich mehr gegeben ist, der der Ätzung ausgesetzt war. Im Folgenden werden Wasser, Lauge, Säure und deren Lösungen als ätzenden Medium bezeichnet. Die elektrisch leitfähigen Vernetzungsstrukturen können beispielsweise durch Dotieren von Kornrandbereichen der nichtleitfähigen Körner mit dem leitfähigen Bestandteil der Keramik oder durch Fadenbildung des leitfähigen Bestandteils der Keramik entstehen. Die Dicke der elektrischen Isolationsschicht wird aufgrund des Eindringverhaltens des ätzenden Mediums in die Randbereiche der elektrisch leitfähigen Keramik bestimmt. Somit spielen die Umgebungs- und Randbedingungen wie Temperatur, Konzentration insbesondere der Säure oder Lauge und der Druck, mit der das ätzende Medium auf die Keramik einwirkt, eine große Rolle. Entscheidend für die. Dicke der Isolationsschicht ist auch die Einwirkdauer, die Zusammensetzung der elektrisch leitfähigen Keramik und die Geometrie des zu isolierenden Bauteils. Bei entsprechend langer Einwirkdauer dringt das ätzende Medium tiefer in die elektrisch leitfähige Keramik ein und verursacht damit eine entsprechend dickere Isolationsschicht. Eine größere Dicke der Isolationsschicht führt auch zu einer höheren Durchschlagsfestigkeit.

Der Ätzvorgang kann zusätzlich durch Elektrolyse unterstützt werden. Durch Anlegen einer Spannung während des Ätzvorgangs zwischen dem ätzenden Medium in flüssiger Form durch eine Elektrode und der elektrisch leitfähigen Keramik wird der Ätzvorgang beeinflusst.

Als ätzendes Medium in flüssiger Form kommen neben Wasser auch wässrige Lösungen von Laugen (Basen), Säuren, Salzlösungen und Salzschmelzen in Betracht. Als Laugen können beispielsweise Natriumhydroxid (NaOH), Kaliumhydroxid (KOH), aber auch andere Laugen verwendet werden. Als Säuren können Salzsäure (HCL), Phosphorsäure (H₃PO₄) oder Schwefelsäure (H₂SO₄), aber auch andere Säuren verwendet werden. Die Ätzrate lässt sich - wie oben erwähnt - beispielsweise durch Temperatur, Konzentration, Druck und Einwirkzeit einstellen.

Will man bestimmte Positionen (Oberflächenbereiche) der elektrisch leitfähigen Keramik dem Ätzvorgang entziehen (partielles Ätzen), so können diese mit einem Material abgedeckt werden, das gegenüber dem ätzenden Medium beständig ist (beispielsweise Delogum oder Epoxidharz). Diese Abdeckung bildet eine Schutzschicht beim Ätzvorgang, so dass das ätzende Medium nicht auf diesen Teil der elektrisch leitfähigen Keramik einwirkt. In diesem Bereich bleibt damit die elektrische Leitfähigkeit erhalten. Nach dem Ätzvorgang kann man die ätzbeständige Schicht wieder abnehmen, so dass dann die elektrisch leitfähige Eigenschaft in dieser Position ausgenutzt werden kann. Auf diese Art und Weise kann man beispielsweise Kontaktierungsstellen für den Anschluss einer elektrischen Leitung generieren.

Mit der vorgenannten Beschichtungstechnik ist aber neben dem partiellen Ätzen auch ein selektives Ätzen ausgewählter Bereiche bzw. die Einstellung von unterschiedlichen Ätztiefen möglich. Dies resultiert in unterschiedlich dicken Isolationsschichten bzw. entsprechend reduzierten Schichten mit elektrisch leitfähigem Material.

So ist es beispielsweise möglich, mit einer Abdeckung bestimmter Teile der Keramik einen ersten Ätzvorgang durchzuführen. Damit dringt das ätzende Medium lediglich in die nicht abgedeckten Bereiche vor und bildet dort eine Isolationsschicht aus. Entfernt man nun die Abdeckung von den abgedeckten Bereichen und führt einen weiteren Ätzvorgang durch, so werden die zunächst abgedeckten Bereiche ebenfalls mit einer Isolationsschicht versehen. Doch die zuvor bereits geätzten Bereiche werden noch weiter geätzt, so dass sich an diesen Stellen die Isolationsschicht in ihrer Dicke verstärkt. Mit diesen Ausbildungsmöglichkeiten für unterschiedlich dicke Isolationsschichten lässt sich die Dicke des noch vorhandenen elektrisch leitfähigen Materials beeinflussen und somit eine gewünschte Querschnittsgeometrie desselben erzeugen. Durch diesen Effekt kann die Leiterdicke festgelegt und damit die Stromverteilungsdichten bzw. -verhältnisse beim späteren Anlegen einer elektrischen Spannung beeinflusst werden. Damit lässt sich ein Temperaturprofil individuell einstellen. Dabei zeigen dünnere elektrisch leitfähige Bereiche eine stärkere Erwärmung gegenüber dickeren elektrisch leitfähigen Bereichen aufgrund des unterschiedlichen elektrischen Widerstandes.

Damit lässt sich durch partielles und/oder selektives Ätzen der elektrisch leitfähigen Keramik auch eine gewünschte Leitungsstruktur ausbilden. Dieses Ausbilden einer Leitungsstruktur kann noch unterstützt werden, wenn vor einem Ätzvorgang eine Struktur von Ausnehmungen in den Körper der elektrisch leitfähigen Keramik eingebracht wird. So können z. B. Löcher, Schlitze etc. in die elektrisch leitfähige Keramik eingebracht werden. Dies kann beispielsweise durch Erodierung, durch Laserschneiden, durch Schneiden mit einem Wasserstrahl, mittels eines Fräsers oder einer Säge, etc. geschehen. In diese so geformten Öffnungen dringt bei einem späteren Ätzvorgang auch das ätzende Medium ein und bildet an den Oberflächen der so geschaffenen Strukturen ebenfalls Isolationsschichten aus. Bringt man beispielsweise entsprechende Schlitze in geeigneter Weise in ein elektrisch leitfähiges Keramikmaterial ein, so kann erreicht werden, dass das Material an bestimmten Stellen durchisoliert ist und abgegrenzte elektrisch leitfähige Bereiche bestehen bleiben. Auf diese Weise können Strukturen nach Art von Leitungsbahnen im Material geschaffen werden, die den Strom in vorbestimmter Weise führen.

Natürlich kann man auch mehr als zwei Ätzschritte - evtl. mit jeweils unterschiedlich abgedeckten Bereichen - durchführen.

Gemäß einer vorteilhaften Ausführungsform der Erfindung kann die elektrisch isolierte elektrisch leitfähige Keramik nachverdichtet werden. Beispielsweise kann unter Aufbringung eines entsprechenden Druckes die Keramik zusammengepresst werden, so dass die durch den Ätzvorgang entstandene Porosität (Ausspülungen, Hohlräume, etc) geschlossen und die Bauteilfestigkeit erhöht wird. Hierzu eignet sich insbesondere isostatisches Pressen. Ein Nachverdichten kann alternativ oder zusätzlich auch durch Aufbringen einer erhöhten Temperatur erfolgen. Durch das Nachverdichten verbessert man auch manche mechanische Eigenschaften wie beispielsweise die Polierbarkeit. Dabei ist im allgemeinen nicht zu befürchten, dass die Leitfähigkeit wieder hergestellt wird, da ein Zusammendrücken nicht soweit geht, dass die Vernetzungen zwischen den einzelnen noch verbliebenen leitenden Körnern wieder hergestellt werden.

Durch das Ätzen, insbesondere an der Oberfläche, eventuell auch mit einem anderen ätzenden Medium, kann je nach elektrisch leitfähigem Keramikmaterial auch eine Oberflächenstruktur, beispielsweise eine Mikro- oder Nanostruktur aufgebracht werden. Dies umso mehr, wenn man wiederum eine entsprechende Abdeckung wählt, unter der kein oder nur geringeres Ätzen erfolgt. Auf diese Weise kann die Oberflächenstruktur der Keramik beeinflusst werden. Eine solchermaßen strukturierte Keramikoberfläche kann beispielsweise in einem Formwerkzeug einer Spritzgießmaschine als Kavitätsoberfläche verwendet werden, um auf einem herzustellenden Spritzgussteil Mikro- und Nanostrukturen abzuformen.

Auch andere Hohlräume, beispielsweise in die elektrisch leitfähige Keramik eingebrachte Kühlbohrungen können durch Einwirkung des ätzenden Mediums elektrisch isoliert werden.

Weitere Vorteile und Ausführungsformen gehen aus den Ansprüchen und Unteransprüchen hervor.

Die Erfindung wird nachfolgend anhand eines Ausführungsbeispiels und mit Bezug auf die beiliegenden Zeichnungen näher erläutert.

Die Zeichnungen zeigen in
- Fig.1: eine rasterelektronenmikroskopische Schnittaufnahme einer teilweise geätzten elektrisch leitfähigen Keramik gemäß dem erfindungsgemäßen Verfahren,
- Fig. 2a: eine Lichtmikroskopaufnahme einer polierten Keramikoberfläche bei 1000- facher Vergrößerung vor dem Ätzvorgang,
- Fig. 2b: eine Lichtmikroskopaufnahme einer polierten Keramikoberfläche bei 1000- facher Vergrößerung nach dem Ätzvorgang,
- Fig. 3a: eine schematische Perspektivansicht eines geschnittenen Körpers einer elektrisch isolierten elektrisch leitfähigen Keramik,
- Fig. 3b: einen Teilausschnitt aus Fig. 3a und
- Fig. 4: eine schematische Darstellung der Kornstruktur, an der die Auswirkung des Ätzvorganges erläutert wird.

Beim vorliegenden Ausführungsbeispiel wird bei einer elektrisch leitfähigen Keramik eine Isolationsschicht durch partielles und selektives Ätzen hergestellt. Dabei wird zunächst ein Keramikkörper verwendet, bei dem Titannitrid (TiN) in Siliciumnitrid (Si₃N₄) eingebettet ist, wodurch eine elektrisch leitfähige Keramik gebildet ist. Die elektrische Leitfähigkeit ist dabei durch die Titannitrid-Kömer gegeben, die durch Titannitrid-Vernetzungen miteinander verbunden sind.

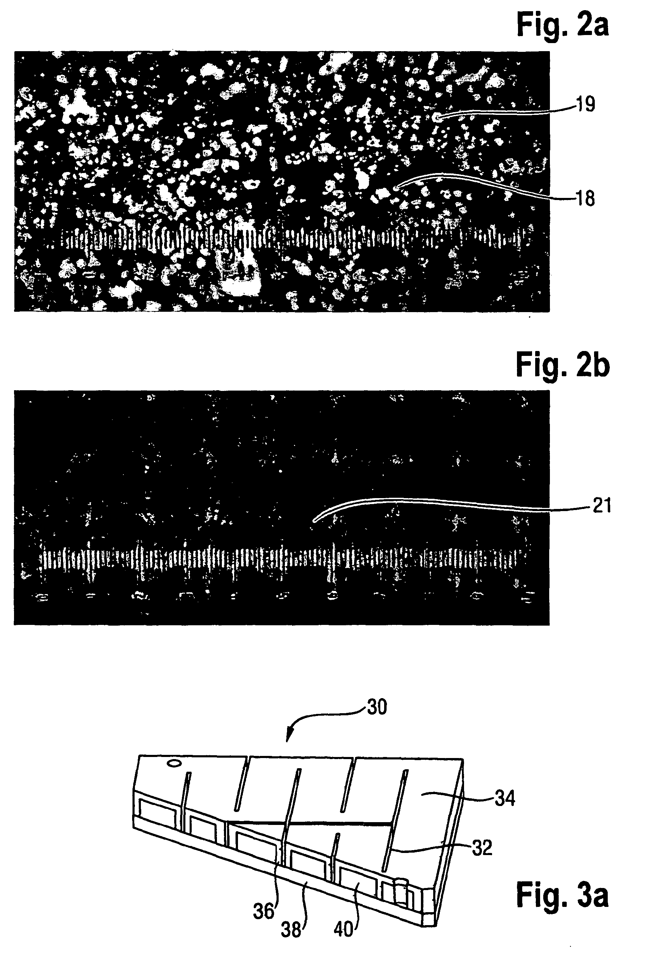

Dieser zunächst vollständig elektrisch leitfähige Keramikkörper wird in einem nächsten Schritt mit einem Erosionsverfahren mit einer Schlitzstruktur versehen, wie sie auf der Oberfläche des Körpers in Fig 3a zu erkennen ist. Dabei werden Schlitze 32 entsprechend einem vorgegebenen Muster mit einer vorgegebenen Tiefe in den Keramikkörper eingebracht. Dieses Einbringen der Schlitze kann durch mechanische, physikalische oder chemische Bearbeitung (Fräsen; Schneiden, Wasserstrahlschneiden, Laserschneiden) geschehen.

Nach dem Einbringen der Schlitze in den noch vollständig elektrisch leitenden Keramikkörper wird der Körper in ein Bad aus 1 n Schwefelsäure eingelegt.

Dabei läuft unter anderem der nachfolgende chemische Vorgang in dem Bereich ab, in den die 1n Schwefelsäure eindringt:

Si₃N₄ + H₂SO₄ + H₂O → SiO₂ + NH₃ + H₂S

TiN + H₂SO₄ + H₂O → Ti(SO₄)₃ + NH₃

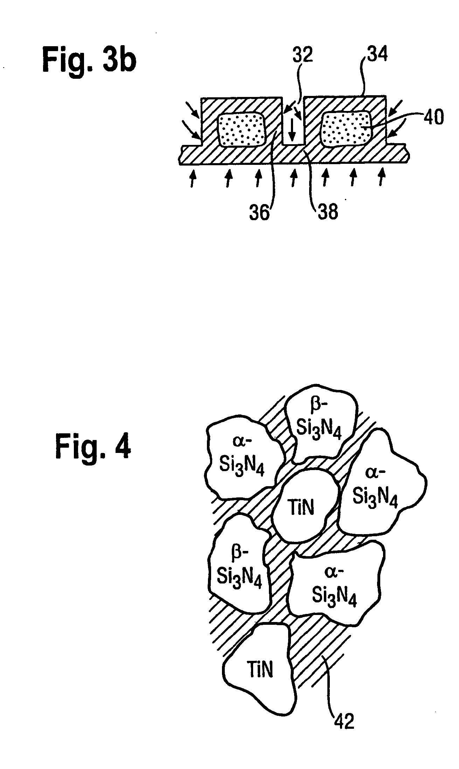

Durch den Ätzvorgang werden die ansonsten zwischen den leitenden Titannitrid-Körnern bestehenden elektrisch leitenden Vernetzungen aufgelöst beispielsweise ausgespült oder in ein Salz umgewandelt. In Fig. 4 ist schematisch ein Ausschnitt mit einigen Körnern dargestellt, bei denen Siliciumnitrid in Alpha- oder Betaform und Titannitrid dargestellt sind. Die Leitfähigkeit in der elektrisch leitfähigen Keramik ist dadurch gegeben, dass zwischen den beiden dargestellten Titannitrid-Körnern eine elektrisch leitende Vernetzung (dargestellt durch Schraffur) geschaffen ist, die die elektrische Leitfähigkeit definiert. Diese Titannitrid-Vernetzung ist beispielsweise durch einen Sinterprozess geschaffen.

Durch Einwirkung des ätzenden Mediums auf die elektrisch leitfähige Keramik, hier also durch Einwirkung der 1n Schwefelsäure, werden diese Vernetzungen, die mit der Bezugsziffer 42 dargestellt sind, aufgelöst bzw. teilweise umgewandelt. Damit verschwindet die Vernetzung zwischen den einzelnen Titannitrid-Körnrn, die ebenfalls durch die Schwefelsäure angegriffen und umgewandelt bzw. herausgelöst werden können. Durch die nicht mehr existierende Verbindung der einzelnen Titannitrid-Körner ist auch die elektrische Leitfähigkeit in diesem Bereich nicht mehr gegeben.

Da eine gewisse Porosität der Isolationsschicht gegeben ist, kann je nach zeitlicher Einwirkungsdauer das ätzende Medium (hier die Schwefelsäure) in den Körper eindringen. Je länger der elektrisch leitfähige Keramikkörper dem ätzenden Medium ausgesetzt ist, umso tiefer dringt diese ein, löst die Vernetzungsstrukturen auf und schafft damit eine umso dickere Isolationsschicht.

Nach dem Einwirkungsvorgang, also nach dem Einwirken der Säure auf die elektrisch leitfähige Keramik in einem Säurebad, wird der Körper dem Säurebad entnommen, mit Wasser gespült und getrocknet, so dass die noch in der Struktur verbliebenen Säurereste ausgebracht werden.

Damit ist ein Körper geschaffen, der in Fig. 3a und ausschnittsweise in Fig. 3b dargestellt ist. Die 1n Schwefelsäure hat an den gesamten Angriffsstellen über eine Tiefe, die durch verschiedene Faktoren, u.a. die Einwirkungszeit, bestimmt ist, eine Isolationsschicht geschaffen. Da die Schwefelsäure sowohl von der Oberseite wie auch von der Unterseite angreift, aber auch in die Schlitze 32 eindringen konnte, wurde eine Isolationsstruktur geschaffen, wie sie in den Figuren 3a und 3b dargestellt ist.

So ist eine isolierte Oberfläche auf der Oberseite, eine isolierte Oberfläche auf der Unterseite 38 und isolierte Oberflächen im Bereich der Schlitze 36 ausgebildet. Durch das Anbringen der Schlitze 32 hat man auch den Effekt erreicht, dass von den schlitzenden bis zur Oberfläche der Unterseite eine vollständig Durchisolierung geschaffen ist, da die Schwefelsäure das Material hier vollständig durchdrungen hat. In diesem Bereich ist die Keramik also nicht mehr elektrisch leitend. Die elektrische Leitfähigkeit ist nur noch in den dunkel dargestellten, zentralen und mittigen Bereichen 40 gegeben, die von der Schwefelsäure nicht erreicht wurden.

Auf diese Weise kann man eine Leitungsstruktur ausbilden, die sich im vorliegenden Ausführungsbeispiel wendelförmig durch den so gebildeten Körper erstreckt.

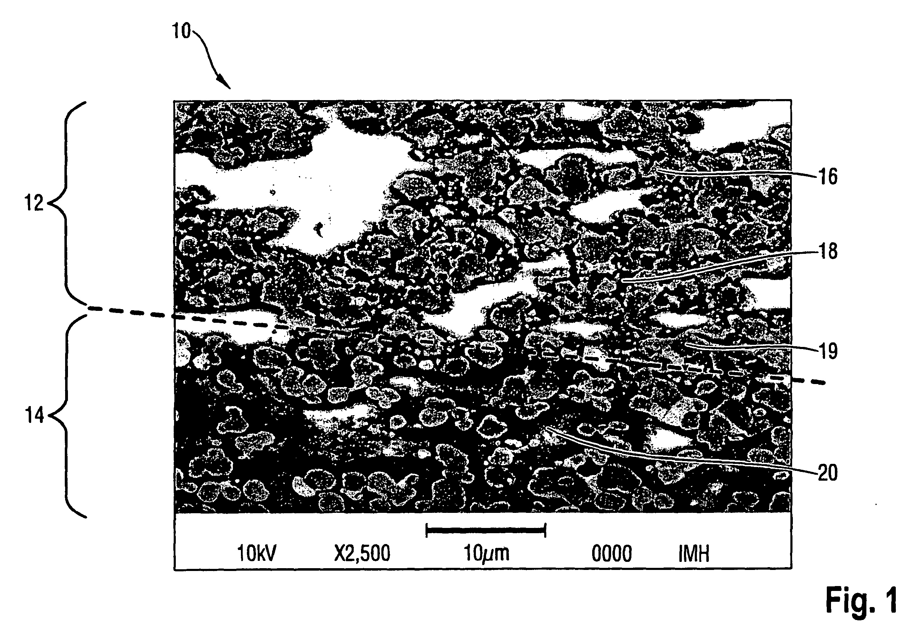

Die Auswirkungen des Einwirkens des ätzenden Mediums sind überdies in der Fig. 1 dargestellt. Im oberen Teil 12 ist die Keramik noch elektrisch leitfähig. Im unteren Bereich 14 liegt ein geätzter Bereich mit einer elektrisch isolierenden Schicht vor, in dem die Keramik nicht mehr elektrisch leitfähig ist. Im oberen Bereich bestehen zwischen den Siliciumnitrid-Kömern 18 und den Titannitrid-Körnern 19 Vernetzungen 16, die die elektrische Leitfähigkeit insgesamt gewährleisten.

Diese elektrisch leitfähigen Vernetzungen 16 sind im unteren Teil 14 der Keramik airfgelöst, was man durch die dargestellte Porosität 20 der geätzten Schicht erkennen kann. Der in der Rasterelektronenmikroskopaufnahme aus Fig. 1 dargestellte Effekt lässt sich auch bei Lichtmikroskopaufnahmen (1000-fache Vergrößerung) erkennen. Diesbezüglich wird auf die Figuren 2a und 2b verwiesen. Auch hier kann man erkennen, dass vor dem Ätzvorgang das Titannitrid 19 gleichmäßig und miteinander verbunden zwischen dem Siliciumnitrid verteilt ist. In Fig. 2b, welche die Keramik nach dem Ätzvorgang darstellt, sieht man nur noch einzelne Reste an Titannitrid 19.

Nach dem Spül- und Heizvorgang wird die in Fig. 3a gezeigte Keramik nochmals durch Anlegen eines Druckes gepresst und nachverdichtet, so dass sich die durch den Ätzvorgang ergebende Porosität reduziert, die Bauteilfestigkeit erhöht und die Bearbeitbarkeit (beispielsweise Polierbarkeit) verbessert wird.

Insgesamt lässt sich mit der vorliegenden Erfindung eine Isolationsmöglichkeit für eine elektrisch leitfähige Keramik schaffen, die äußerst kostengünstig und einfach anwendbar sowie in beiden Bereichen variabel gestaltbar (partielles und selektives Ätzen) ist, so dass sich nahezu jegliche Leitungsstruktur in der elektrisch leitfähigen Keramik realisieren lässt.

### Bezugszeichenliste

- 10: elektrisch leitfähige Keramik mit Isolationsschicht
- 12: Elektrisch leitfähiger Teil
- 14: Elektrisch isolierter Teil
- 16: TiN-Vernetzungen
- 18: Si3N4 (Siliziumnitrid)
- 19: TiN (Titannitrid)
- 20: Porosität
- 30: Selektiv geätzter Keramikkörper
- 32: Erodierter Schlitz
- 34: Isolationsschicht auf der Oberseite
- 36: Isolationsschicht in den Schlitzen
- 38: Isolationsschicht an der Unterseite
- 40: Elektrisch leitfähiger Teil
- 42: TiN-Vemetzungen

## Patentansprüche

1. Verfahren zur Herstellung einer Heizeinrichtung umfassend ein elektrisch leitfähiges Keramikmaterial mit einer elektrischen Isolationsschicht,
**gekennzeichnet durch** die Schritte
Herstellen der elektrisch leitfähigen Keramik,
Festlegen der Oberflächenbereiche, in denen eine elektrische Isolationsschicht erzeugt werden soll,
Aussetzen der festgelegten Oberflächenbereiche des elektrisch leitfähigen Keramikmaterial für eine bestimmte Zeit einem ätzenden Medium derart, dass in diesen Oberflächenbereichen die die elektrische Leitfähigkeit bildenden Vernetzungsstrukturen aufgelöst werden und
Einsatz der isolierten elektrisch leitfähigen Keramik in der Heizeinrichtung zu Heizzwecken.

2. Verfahren nach Anspruch 1,
**dadurch gekennzeichnet,**
**dass** als ätzendes Medium eine verdünnte oder konzentrierte Lauge oder Säure jeweils in gasförmiger oder flüssiger Form verwendet wird.

3. Verfahren nach Anspruch 1 oder 2,
**dadurch gekennzeichnet,**
**dass** die Temperatur des ätzenden Mediums, dessen Konzentration oder dessen Druck entsprechend dem gewünschten Ätzgrad gewählt und oder die vorgenannten Größen während der Einwirkung verändert werden.

4. Verfahren nach einem der Ansprüche 1 bis 3,
**dadurch gekennzeichnet,**
**dass** die Dicke der Isolationsschicht durch die Länge der zeitlichen Einwirkung des ätzenden Mediums auf das elektrisch leitfähige Keramikmaterial bestimmt wird.

5. Verfahren nach einem der vorhergehenden Ansprüche,
**dadurch gekennzeichnet,**
**dass** die elektrisch leitfähige Keramik vor dem Ätzvorgang stellenweise mit einer ätzfesten Beschichtung abgedeckt wird.

6. Verfahren nach Anspruch 5,
**dadurch gekennzeichnet,**
**dass** der Abdeck- und Ätzvorgang zumindest ein weiteres Mal wiederholt wird.

7. Verfahren nach einem der vorhergehenden Ansprüche,
**dadurch gekennzeichnet,**
**dass** vor einem Ätzvorgang eine Struktur in den Körper der elektrisch leitfähigen Keramik eingebracht wird.

8. Verfahren nach Anspruch 7,
**dadurch gekennzeichnet,**
**dass** die Struktur durch Erodieren, Laserbehandlung, Wasserstrahlschneiden oder mechanische Bearbeitungsvorgänge eingebracht wird.

9. Verfahren nach einem der vorhergehenden Anspruch,
**dadurch gekennzeichnet,**
**dass** durch selektives Ätzen eine unterschiedliche Dicke der Isolationsschicht und damit auch des elektrisch leitenden Teils der elektrisch leitenden Keramik hergestellt wird.

10. Verfahren nach einem der vorhergehenden Ansprüche,
**dadurch gekennzeichnet,**
**dass** nach dem Ätzvorgang die teilweise isolierte elektrisch leitfähige Keramik durch Druck und/oder Temperatur nachverdichtet wird.

11. Verfahren nach einem der vorhergehenden Ansprüche,
**dadurch gekennzeichnet,**
**dass** Hohlräume in der elektrisch leitfähigen Keramik ausgebildet werden, die ebenfalls durch Einwirkung des ätzenden Mediums mit einer elektrischen Isolierschicht versehen werden.

12. Verfahren nach einem der vorhergehenden Ansprüche,
**dadurch gekennzeichnet,**
**dass** durch selektives Ätzen auf der Oberfläche eine Materialabtragung durchgeführt wird, die zu einer Oberflächenstruktur führt.

13. Heizeinrichtung, insbesondere für den Einsatz in einer Spritzgießmaschine, umfassend eine elektrisch leitfähige Keramik, deren Oberfläche in ausgewählten Bereichen mit einer Isolationsschicht versehen ist,
**dadurch gekennzeichnet,**
**dass** die Isolationsschicht an den bestimmten Oberflächenbereichen durch stellenweises Auflösen der Vernetzungsstruktur in der elektrisch leitfähigen Keramik gemäß einem der Ansprüche 1 bis 12 gebildet ist.

## Claims

1. A method for producing a heating element comprising an electrically conductive ceramic material with an electrical insulating layer,
**characterised by** the steps
production of the electrically conductive ceramic,
specification of the surface areas in which an electrical insulating layer is to be produced,
exposure of the specified surface areas of the electrically conductive ceramic material for a given time to an etching medium, such that the interlinking structures forming the electrical conductivity in these surface areas are disintegrated and
use of the insulated electrically conductive ceramic in the heating element for heating purposes.

2. The method according to claim 1,
**characterised in that**
a dilute or concentrated base or acid, in either gas or liquid form in each case, is used as the etching medium.

3. The method according to claim 1 or 2,
**characterised in that**
the temperature of the etching medium, its concentration or pressure is chosen according to the level of etching required and/or the aforementioned variables are changed during the action.

4. The method according to one of the claims 1 to 3,
**characterised in that**
the thickness of the insulating layer is determined by the length of the temporal action of the etching medium on the electrically conductive ceramic material.

5. The method according to one of the preceding claims,
**characterised in that**
the electrically conductive ceramic is covered in parts with an etch-resistant coating before the etching process.

6. The method according to claim 5,
**characterised in that**
the covering and etching process is repeated at least once more.

7. The method according to one of the preceding claims,
**characterised in that**
a structure is introduced into the body of the electrically conductive ceramic before an etching process.

8. The method according to claim 7,
**characterised in that**
the structure is introduced by erosion, laser treatment, water jet cutting or machining operations.

9. The method according to one of the preceding claims,
**characterised in that**
the selective etching produces a different thickness for the insulating layer and therefore also for the electrically conductive part of the electrically conductive ceramic.

10. The method according to one of the preceding claims,
**characterised in that**
the partially insulated electrically conductive ceramic is redensified either by pressure and/or temperature after the etching process.

11. The method according to one of the preceding claims,
**characterised in that**
cavities are formed in the electrically conductive ceramic, which are also produced through the action of the etching medium with an electrically conductive insulating layer.

12. The method according to one of the preceding claims,
**characterised in that**
selective etching on the surface results in material erosion, which produces a surface structure.

13. A heating element, particularly for use in an injection moulding machine, comprising an electrically conductive ceramic, the surface of which is provided with an insulating layer in selected areas,
**characterised in that**
the insulating layer is formed at specified surface areas by the disintegration in parts of the interlinking structure in the electrically conductive ceramic in accordance with claims 1 to 12.

## Revendications

1. Procédé de fabrication d'un dispositif de chauffage comprenant un matériau céramique conducteur d'électricité avec une couche d'isolation électrique,
**caractérisé par** les étapes
de fabrication de la céramique conductrice d'électricité,
de définition des zones de surface dans lesquelles une couche d'isolation électrique doit être générée,
d'exposition des zones de surface définies du matériau céramique conducteur d'électricité, pour une durée déterminée, à un milieu corrosif, de manière à ce que, dans lesdites zones de surface, les structures de réticulation génératrices de conductivité électrique sont dissoutes,
de mise en oeuvre de la céramique conductrice d'électricité pourvue d'une isolation, dans un dispositif de chauffage, à des fins de chauffage.

2. Procédé selon la revendication 1,
**caractérisé en ce que**
l'on utilise, en tant que milieu corrosif, une base ou un acide dilué(e) ou concentré(e), l'un ou l'autre pouvant se présenter sous une forme gazeuse ou liquide.

3. Procédé selon les revendications 1 ou 2,
**caractérisé en ce que**
la température du milieu corrosif, sa concentration ou sa pression sont choisies en fonction du degré de gravure souhaité et/ou on fait varier les paramètres précités pendant son action.

4. Procédé selon l'une des revendications 1 à 3,
**caractérisé en ce que**
l'épaisseur de la couche isolatrice est déterminée par la durée de l'action du milieu corrosif sur le matériau céramique conducteur d'électricité.

5. Procédé selon l'une des revendications précédentes,
**caractérisé en ce que**,
avant l'opération de gravure, la céramique conductrice d'électricité est partiellement recouverte avec un revêtement indélogeable.

6. Procédé selon la revendication 5,
**caractérisé en ce que**
l'opération de recouvrement et de gravure est répétée au moins une fois.

7. Procédé selon l'une des revendications précédentes,
**caractérisé en ce que**,
préalablement à une opération de gravure, le corps de la céramique conductrice d'électricité est pourvu d'une structure.

8. Procédé selon la revendication 7,
**caractérisé en ce que**
ladite structure est générée par érosion, par traitement au laser, par découpage au jet d'eau ou par des opérations d'usinage mécanique.

9. Procédé selon l'une des revendications précédentes,
**caractérisé en ce que**
l'on réalise, par gravure sélective, différentes épaisseurs de ladite couche isolatrice et, par conséquent, également de la partie électriquement conductrice de la céramique électriquement conductrice.

10. Procédé selon l'une des revendications précédentes,
**caractérisé en ce que**,
suite à l'opération de gravure, la céramique conductrice d'électricité pourvue d'une isolation partielle subit une densification ultérieure par un effet de pression et/ou de température.

11. Procédé selon l'une des revendications précédentes,
**caractérisé en ce que**
l'on forme des cavités au sein de la céramique conductrice d'électricité lesquelles sont également pourvues, par l'action du milieu corrosif, d'une couche d'isolation électrique.

12. Procédé selon l'une des revendications précédentes,
**caractérisé en ce que**
l'on réalise, par gravure sélective, un enlèvement de matière sur la surface ce qui conduit à une structure de surface.

13. Dispositif de chauffage, notamment destiné à une mise en oeuvre dans une machine de moulage par injection, comprenant une céramique conductrice d'électricité dont la surface est pourvue, dans des zones sélectionnées, d'une couche d'isolation,
**caractérisé en ce que**
la couche d'isolation est formée, au niveau des zones de surface déterminées, par dissolution localisée de la structure de réticulation au sein de la céramique conductrice d'électricité selon l'une des revendications 1 à 12.
